# EUROPEAN PATENT APPLICATION

(11) **EP 2 031 852 A1**
(43) Date of publication of application: **04.03.2009**
(21) Application number: 07714999.5
(22) Date of filing: 27.02.2007
(51) Int. Cl.: H04M 11/00, H04L 12/56

(54) **COMMUNICATION APPARATUS CONNECTION DEVICE**

(30) Priority: 10.03.2006 JP 2006065693
(71) Applicant: Sanden Corporation, Isesaki-shi, Gunma 372-8502 (JP)
(72) Inventor: NAKAJIMA, Kazuya c/o SANDEN CORPORATION, Gunma 3728502 (JP)
(74) Representative: Haley, Stephen
(86) International application number: PCT/JP2007/053656
(87) International publication number: WO 2007/105484

(57) **Abstract**

When a connection adapter 1 for connecting a host device 10 to communication modules 21, 22, and 23 includes storage means 151a for storing a telephone number associated with necessary connection destination information for a network connection, and a connection control unit 121 for receiving a connection request including a telephone number from the host device 10, acquiring connection destination information from the storage means 151a according to the telephone number, and performing a network connecting process using the connection destination information.

## Description

### Technical field

The present invention relates to the field of telemetring for collecting sales information about a vending machine and the field of telematics for distributing traffic information to a mobile object.

### Background art

Recently, telemetring and telematics for collecting and distributing information over a wireless packet communication network have become widespread. The telemetring originally refers to a system of reading a measured value by a measure via a communication line. However, it has been generally used as a term indicating not only reading data but also monitoring the operation of equipment and performing remote control. A typical example of telemetring is a sales management system of a vending machine, a use amount management system of a gas, water supply, etc., a management system in a parking lot without humans in attendance, etc. For a sales management system of a vending machine, refer to the patent document 1. The telematics refers to providing information in real time by combining a mobile object such as an automobile with a communication system. A typical example of telematics can be a vehicle-mounted information system etc. for providing in real time a terminal provided for a vehicle with traffic information and navigation information.

In the fields above, communication equipment for connection to a wireless packet communication network in a remote location and a host device to the communication equipment are arranged. The host device corresponds to data terminal equipment (DTE). The communication equipment corresponds to data circuit-terminating equipment (DCE).

For example, in the sales management system of a vending machine, the control device for controlling the sales and the temperature in the machine correspond to the host device. Each host device is periodically or arbitrarily connected to a predetermined network through communication equipment, and to a predetermined managing computer over the network. The host device connected to the managing computer transmits various types of data to be managed.
Patent Document 1: Japanese Patent Publication 2003-51056

### Disclosure of the invention

### Problems to be solved by the invention

In the conventional system, there can be a request to change the communication partner of a host device into another managing computer as necessary. For example, there can be a request to exchange a managing computer or change a network to which the managing computer belongs. In this case, an IP address etc. of the managing computer is changed. However, the IP address etc. of a host device is often set fixedly for connection only to a specific managing computer. Therefore, the request cannot be satisfied.

In addition, there can be a request to allow a host device to communicate with a plurality of managing computers. For example, communications of data to be managed are performed with a first managing computer, and communications is performed with a second managing computer for the update of firmware, the monitor of a state, etc. However, since the IP address etc. of a host device is often set fixedly for connection only to a specific managing computer as described above, the above-mentioned request cannot be satisfied.

The present invention has been developed to solve the above-mentioned problems, and aims at providing a connection adapter for communication device capable of communicating with any computer.

### Means for solving the problems

To attain the above-mentioned advantages, the present invention proposes a connection adapter for communication device including: a first interface for connecting communication equipment for a network connection service; a second interface for connecting a host device for performing communication using the communication equipment; a connection control unit for performing a network connecting process; a communication control unit for relaying communications using the communication equipment by the host device; and storage means for storing a telephone number associated with connection destination information required for network connection. With the configuration, upon receipt of a connection request including a telephone number from the host device, the connection control unit acquires the connection destination information from the storage means on a basis of the telephone number, and performs a network connecting process according to the connection destination information.

According to the present invention, upon receipt of a connection request including a telephone number from a host device, the connection adapter performs connection to a network according to the connection destination information associated with the telephone number. Therefore, by appropriately changing the connection destination information stored in the storage means of the connection adapter, thereby easily changing a connection destination of the host device.

The host device corresponds to data terminal equipment (DTE). The communication equipment corresponds to data circuit-terminating equipment (DCE).

In the present application, in the above-mentioned connection adapter, the communication equipment is used for a network connection service of assigning a dynamic IP address to a connection terminal, and the connection control unit of the connection adapter acquires the connection destination information from the storage means at a connection start request when the communication equipment receives the connection start request from a network side, and the network connecting process is performed using the connection destination information.

According to the present invention, the connection destination information is acquired at a connection request received from the network side regardless of the telephone number included in the connection request issued by the host device, and a connection is made to a network according to the connection destination information. Therefore, communications can be performed with a computer other than a connection destination corresponding to the telephone number issued from the host device. An example of a connection start request from the network side can be a request received from a messaging service provided by a network connection service.

"Dynamically assigning an IP address" means issuing an IP address from a communication network to a wireless communication terminal when the wireless communication terminal is connected to a wireless packet communication network. Issuing an IP address can be performed by assigning one of the IP addresses included in a predetermined range, or by fixedly assigning an IP address corresponding to a wireless communication terminal, which depends on the service mode in the wireless packet communication network.

In the present application, in the connection adapter, the communication control unit converts an IP address stored in the header of the IP packet.

According to the present invention, the host device can be connected to a network or a computer having an IP address different from the predetermined IP address.

### Advantages of the invention

As described above, according to the present invention, the connection adapter performs connection to a network according to the connection destination information associated with a telephone number when a connection request including a telephone number is received from the host device. Therefore, the connection destination of the host device can be easily changed by appropriately changing the connection destination information stored in the storage means of the connection adapter.

### Brief description of the drawings

Figure 1 shows the configuration of a communication system according to an embodiment of the present invention;
Figure 2 is an explanatory view of an address management table;
Figure 3 shows a network of a communication system according to an embodiment of the present invention;
Figure 4 shows the configuration of a connection adapter;
Figure 5 is a block diagram showing the function of a main control unit of a connection adapter;
Figure 6 is an explanatory view of an example of the setting information in the connection adapter;
Figure 7 is a block diagram showing the function of a network router;
Figure 8 is an explanatory view of an example of a host device information table;
Figure 9 is an explanatory view of an example of the address conversion table;
Figure 10 is an explanatory view of the sequence of offering a network connection service as a presumption and starting communications from the host device;
Figure 11 is an explanatory view of the sequence of offering a network connection service as a presumption and starting communications from a managing computer;
Figure 12 is an explanatory view of the sequence of starting communications from the host device according to the first embodiment of the present invention;
Figure 13 is an explanatory view of the sequence of starting communications from the host device according to the first embodiment of the present invention;
Figure 14 is an explanatory view of an address converting process;
Figure 15 is an explanatory view of the sequence of starting communications from the managing computer according to the first embodiment of the present invention;
Figure 16 is an explanatory view of the sequence of starting communications from the managing computer according to the first embodiment of the present invention;
Figure 17 is an explanatory view of the address converting process;
Figure 18 shows the configuration of the communication system according to the second embodiment of the present invention;
Figure 19 is an explanatory view showing an example of an address management table;
Figure 20 is an explanatory view of the sequence of starting communications from the host device according to the second embodiment of the present invention;
Figure 21 is an explanatory view of the address converting process;
Figure 22 is an explanatory view of the sequence of starting communications from the managing computer according to the second embodiment of the present invention;
Figure 23 is an explanatory view of the sequence of starting communications from the managing computer according to the second embodiment of the present invention; and
Figure 24 is an explanatory view of the address converting process.

### Description of symbols

- 1: connection adapter
- 120: main control unit
- 121: line control unit
- 122: communication control unit
- 10: host device
- 20, 25, 26: communication module
- 40, 45, 45: wireless packet communication network
- 42: messaging server
- 43: address management server
- 50, 55: in-house LAN
- 51, 56: managing computer
- 60: network router
- 63: line control unit
- 64: communication control unit
- 65: setting data storage unit
- 65a: host device information table
- 65b: address conversion table

### Best mode for carrying out the invention

### (First Embodiment)

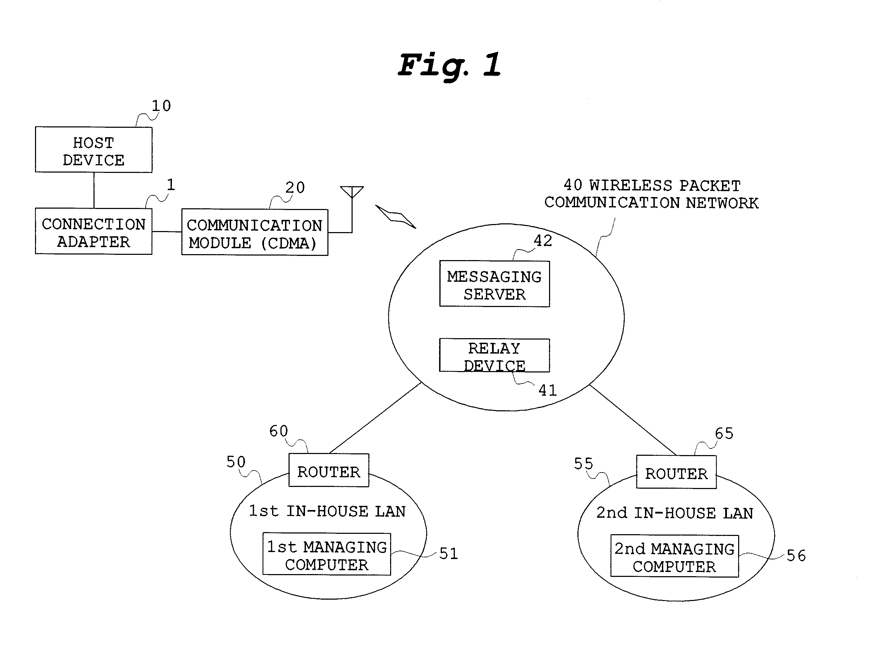

The communication system according to a first embodiment of the present invention is described below with reference to the attached drawings. Figure 1 shows the configuration of a telemetring system using the communication system according to the present invention.

This system aims at providing a network environment obtained by connecting a host device 10 of, for example, a control device of a vending machine to a first in-house LAN 50 and a second in-house LAN 55 over a wireless packet communication network 40 as shown in Figure 1. It is assumed that the host device 10 and a terminal (in the example shown in Figure 1, a managing computer 51 of a vending machine etc.) in the in-house LANs 50 and 55 is set for a network connection service for assigning a fixed IP address. The main advantage of the present system is to allow the wireless packet communication network 40 to use a network connection service for assigning a dynamic IP address to a connection terminal without reforming a terminal in the host device 10 and the in-house LANs 50 and 55. The communication system is described below in detail.

The host device 10 corresponds to data terminal equipment (DTE). The host device 10 is designed to correspond to a specific carrier and a network connection service provided by the carrier. Practically, it is assumed that the host device 10 uses a network connection service of assigning a fixed IP address to a connection terminal. In addition, the host device 10 is designed to connect a communication module corresponding to the service, and correspond to a connection protocol, an authentication protocol, etc. corresponding to the service.

The network connection service upon which the host device 10 is based is described below. In the network connection service, a telephone number is assigned to a communication module in advance by a carrier. In the wireless packet communication network under the network connection service is provided with a relay device for performing line control, packet relay, etc. In the relay device, a telephone number is assigned to an in-house LAN as a connection destination network. Upon issue of a call to the telephone number of the relay device in the wireless packet communication network, a terminal having a connected communication module makes a connection to a predetermined network such as an in-house LAN corresponding to the telephone number. A connection to the relay device is allowed only from a communication module having a telephone number assigned in advance.

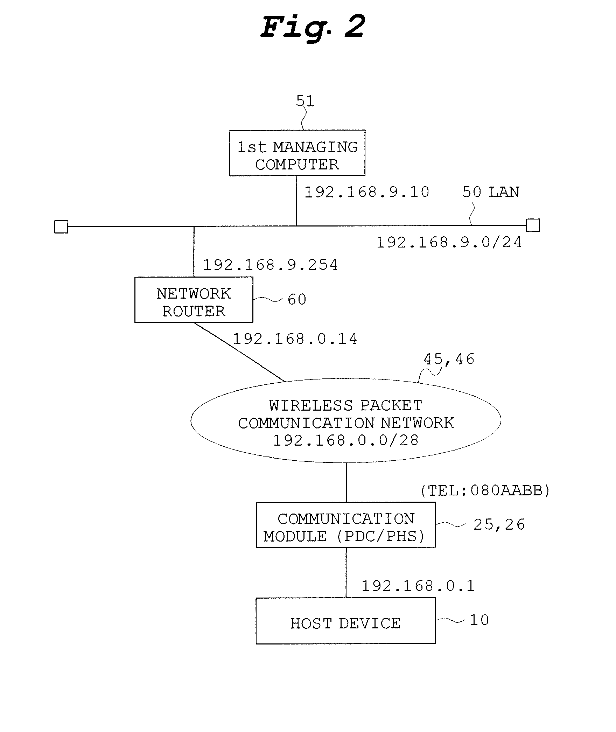

Figure 2 shows an example of a network using a network connection service upon which the host device 10 is based. As shown in Figure 2, the host device 10 performs a connection to wireless packet communication network 45 configured by the network connection service using communication module 25. In the present embodiment, the wireless packet communication network 45 and the communication module 25 are assumed to be in accordance with the PDC standard. Furthermore, in the service, an IP address belonging to the network of 192.168.0.0/28 is fixedly assigned to the WAN side interface of a network router 60 and the communication module 25. The host device 10 is connected to the LAN 50 in the terminal type network connection service. Therefore, the IP address assigned to the communication modules 25 and 26 is similar to the IP address assigned to the host device 10. It is assumed that, in the in-house LAN 50, a fixed IP address of each device is assigned so that it can belong to the network of 192.168.9.0/24. Upon receipt of a packet with an IP address in the 192.168.0.0/28 from the in-house LAN 50, the network router 60 relays the packet to the wireless packet communication networks 45 and 46. On the other hand, upon receipt of a packet with an IP address in the 192.168.9.0/24 from the wireless packet communication networks 45 and 46, the network router 60 relays the packet to the in-house LAN 50. With the configuration, the managing computer 51 can start communications to a fixed IP address of the host device 10. In addition, the managing computer 51 can designate the host device 10 with reference to the source IP address of the communication from the host device 10. The host device 10 is set to be connected only to the first in-house LAN 50, and is not designed to be connected to the second in-house LAN 55.

The present invention is based on the use of the host device 10 and the managing computer 51, and it is assumed that a network system can be configured in the wireless packet communication network 40 under the network connection service in which a dynamic IP can be assigned. Furthermore, the present invention enables the communications with the second in-house LAN 55 not presumed by the host device to be performed.

Next, a network connection service used in an embodiment of the present invention, and in which a dynamic IP address is assigned is described below. In the network connection service, a telephone number is assigned in advance by a carrier to a communication module 20. The wireless packet communication network 40 is provided with a relay device 41for controlling a line and relaying a packet etc. as shown in Figure 1. A terminal to which the communication module 20 is connected is connected to the wireless packet communication network 40 by issuing a call with a predetermined special number assigned. Then, the terminal can be connected to the in-house LANs 50 and 55 as a connection destination network by performing an authenticating process using a PAP (password authentication protocol) with the relay device 41. In the above-mentioned PAP authentication, a connection destination network can be specified by including the information specifying a connection destination in a user name. To be more concrete, a user is authenticated and a connection destination is designated in the format of a user name @ domain name by describing the connection destination information as a domain name. In the network connection service, an IP address group in a predetermined range is allocated by a carrier to the wireless packet communication network 40, and an IP address contained in the IP address group is dynamically assigned by the IPCP (Internet protocol control protocol) to the communication module 20. The IP address to be assigned to the communication module 20 is not fixed, and the same IP address as in the preceding connection, or a different address can be assigned.

In the network connection service, it is assumed that a messaging service is provided for a user. The messaging service is not a network connection service using a TCP/IP, but is implemented by a unique protocol using a wireless communication network. In this messaging service, the wireless packet communication network 40 or a predetermined messaging server 42 provided for another network such as the Internet etc. are assigned the telephone number of the communication module 20, thereby enabling a relatively short message to be transmitted. The HTTP is used in a message transmission request to the messaging server 42.

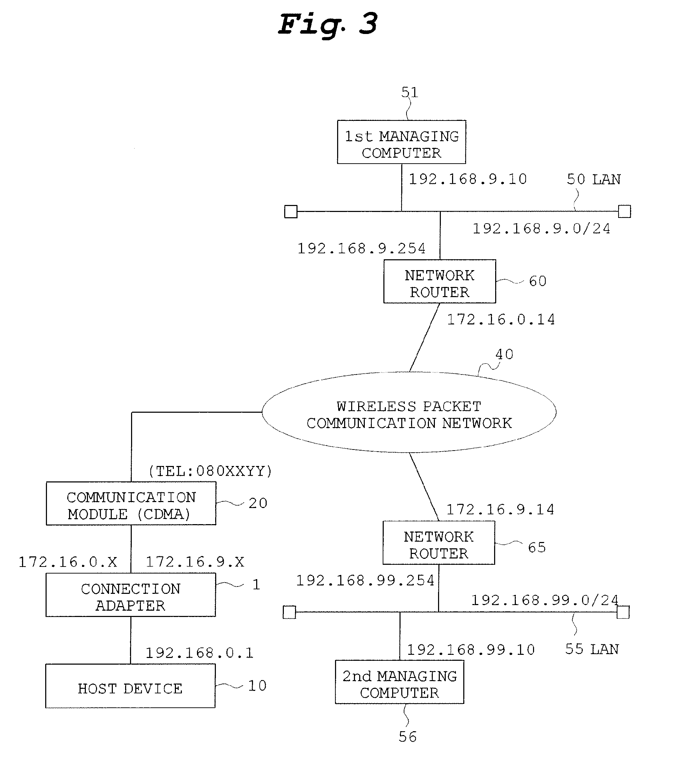

Next, the chart of the network of the system according to the present embodiment is described below with reference to Figure 3. Figure 3 is a chart of the network of the present system. As shown in Figure 3, in this system, a fixed IP address belonging to 192.168.0.0/28 is assigned to the host device 10 and the first in-house LAN 50 as in the network described above with reference to Figure 2.

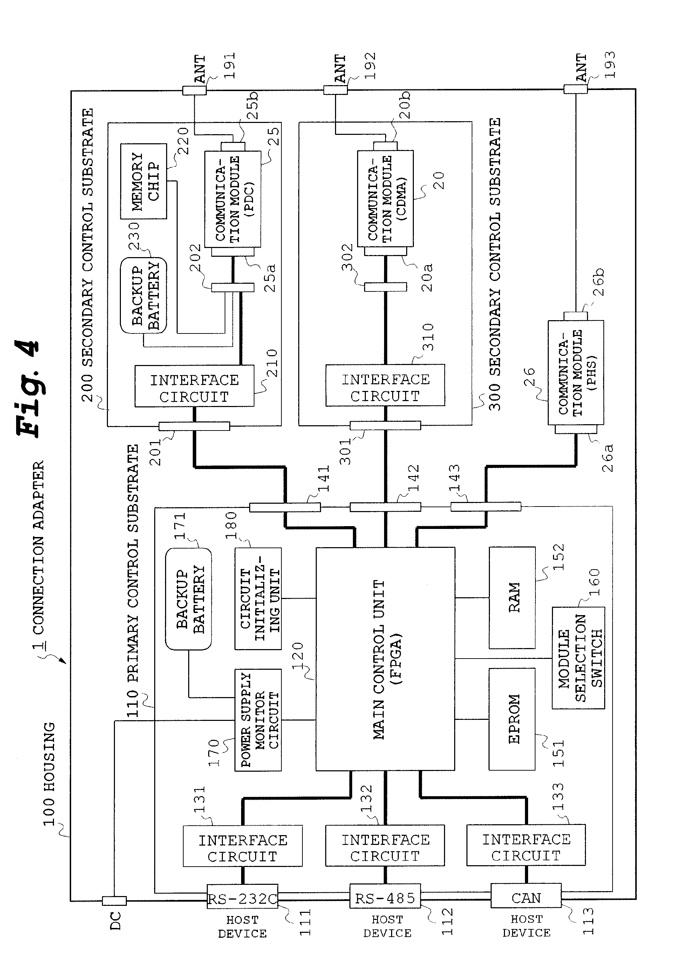

When a connection is made to the first in-house LAN 50, the wireless packet communication network 40 is assigned an address group of 172.16.0.0/28. The WAN side of the network router (hereinafter referred to simply as a "router") 60 at the boundary point between the wireless packet communication network 40 and the in-house LAN 50 is assigned a fixed IP address 172.16.0.14. The communication module 20 is assigned a dynamic address in 172.16.0.0/28 when it is connected to the wireless packet communication network 40 (in Figure 4, it is expressed by 172.16.0.X for convenience). A connection adapter 1 is connected to the LAN 50 with the terminal type network connection service. Therefore, the IP address of the connection adapter 1 is an IP address dynamically assigned to the communication module 20. When the connection adapter 1 is connected to the first in-house LAN 50, example1 is specified as a domain name when an authenticating process is performed.

On the other hand, when a connection is made to the second in-house LAN 55, the wireless packet communication network 40 is assigned an address group of 172.16.9.0/28. A fixed IP address 172.16.9.15 is assigned to the WAN side of a network router (hereinafter referred to simply as a router) 65 as a boundary point between the wireless packet communication network 40 and the in-house LAN 55. In addition, the communication module 20 is dynamically assigned an address in 172.16.9.0/28 when a connection is made to the wireless packet communication network 40 (in Figure 3, it is expressed by 172.16.9.X for convenience). The connection adapter 1 is connected to the LAN 55 in the terminal type network connection service. Therefore, the IP address of the connection adapter 1 is an IP address dynamically assigned to the communication module 20. When the connection adapter 1 is connected to the second in-house LAN 55, example2 is specified as a domain name when an authenticating process is performed. The second in-house LAN 55 is fixedly assigned an IP address to belong to the network of 192.168.99.0/24.

In the above-mentioned network environment in the present invention, communications can be started from the first managing computer 51 in the first in-house LAN 50 to the host device 10, and the host device 10 can be designated when communications are started from the host device 10 to the first managing computer 51. Furthermore, communications are started from a second managing computer 56 in the second in-house LAN 55 to the host device 10.

Next, the connection adapter 1 is described below. The connection adapter 1 connects plural types of host devices 10 to plural types of communication modules 20, 25, and 26. In the connection adapter 1 according to an embodiment of the present invention, it corresponds to the communication module 20 in accordance with the CDMA standard, the communication module 25 in accordance with the PDC standard, and the communication module 26 in accordance with the PHS standard. Each of the communication modules 20, 25, and 26 is communication equipment connected to the wireless packet communication network 40, 45, and 46 configured by the respective carriers. Each carrier corresponds to a uniquely determined communication standard and communication protocol service. As described above, the host device 10 is designed to correspond to a specific carrier and a service provided by the carrier. Practically, a communication module corresponding to the service is connected, and the connection protocol and the authentication protocol can be satisfied corresponding to the service.

The host device 10 according to an embodiment of the present invention is assumed to be directly connected to the communication module 25 in accordance with the PDC standard, and the communication module 26 in accordance with the PHS standard. Using the communication modules 25 and 26, it can be connected only to the first in-house LAN 50 over each of the wireless packet communication networks 45 and 46. The connection adapter 1 according to an embodiment of the present invention can be connected to the in-house LANs 50 and 55 through the wireless packet communication network 40 using the communication module 20 in accordance with the CDMA without improving or changing the host device 10. The connection adapter 1 is described below in more detail.

First, the configuration of the connection adapter 1 according to an embodiment of the present invention is described below with reference to Figure 4. Figure 4 shows the state in which the connection adapter 1 includes the three communication modules 20, 25, and 26. During the operation, at least the communication module 20, 25, or 26 can be included for practical use.

The connection adapter 1 includes in a housing 100 a primary control substrate 110, a secondary control substrate 200 for loading the communication module 25 in accordance with the PDC standard, a secondary control substrate 300 for loading the communication module 20 in accordance with the CDMA standard, and the communication module 26 in accordance with the PHS standard. The secondary control substrates 200 and 300, and the communication module 26 are provided as freely attached to and detached from the primary control substrate 110.

The connection adapter 1 according to an embodiment of the present invention is provided with plural types of connectors for connection to the host device for connection to plural types of main control units. Practically, the primary control substrate 110 is provided with a connector 111 used in accordance with the RS-232C standard, a connector 112 used in accordance with the RS-485 standard, and a connector 113 used in accordance with the CAN (controller area network) standard.

A primary control substrate 110 is provided with a main control unit 120 implemented by an FPGA (field programmable gate array) as a type of PLD (programmable logic device), an interface circuit 131 in accordance with the RS-232C standard, an interface circuit 132 in accordance with the RS-485 standard, and an interface circuit 133 in accordance with the CAN standard. Each of the interface circuits 131, 132, and 133 is interposed between the connectors 111, 112, and 113 and the main control unit 120. Thus, the main control unit 120 can communicate with the host device connected to the connectors 111, 112, and 113 through each of the interface circuits 131, 132, and 133.

The primary control substrate 110 includes a connector 141 for connection with the secondary control substrate 200, a connector 142 for connection with the secondary control substrate 300, and a connector 143 for connection with the communication module 26 in accordance with the PHS standard. Each of the connectors 141, 142, and 143 is connected to the main control unit 120. Thus, the main control unit 120 can communicate with the communication module 25 in accordance with the PDC standard through the secondary control substrate 200. Similarly, the main control unit 120 can communicate with the communication module 20 in accordance with the CDMA standard through the secondary control substrate 300. The main control unit 120 can communicate directly with the communication module 26 in accordance with the PHS standard.

Furthermore, the primary control substrate 110 is provided with EPROM 151 storing a control program of the main control unit 120, and RAM 152 for use as various work area of the main control unit 120. Additionally, the primary control substrate 110 is provided with a module selection switch 160 for selection of the communication module 20, 25, or 26. The main control unit 120 performs an operation corresponding to the communication modules 20, 25, and 26 selected by the module selection switch 160. The configuration and the operation of the main control unit 120 are described later.

The primary control substrate 110 operates by external DC power supply. In addition, the primary control substrate 110 directly supplies DC power to the secondary control substrates 200 and 300, and the communication module 26 of the PHS standard through each of the connectors 141, 142, and 143. The primary control substrate 110 is provided with a power supply monitor circuit 170 for monitoring external abnormal supply of DC power, and a backup battery 171. When the power supply monitor circuit 170 detects external abnormal power supply, the circuit controls power supply from the backup battery 171 to the primary control substrate 110, the secondary control substrates 200 and 300, and the communication module 26 in accordance with the PHS. In addition, when the power supply monitor circuit 170 detects external abnormal power supply, it notifies the main control unit 120 of the abnormal power supply. Furthermore, when the power supply monitor circuit 170 detects the recovery of external power supply after abnormal power supply, it notifies the main control unit 120 of the recovery.

In addition, the primary control substrate 110 is provided with a circuit initializing unit 180 for initializing and generating the internal circuit of the main control unit 120 implemented by the FPGA. The circuit initializing unit 180 contains a program for initializing and generating an internal circuit of the main control unit 120. The circuit initializing unit 180 forms a circuit configuring the main control unit 120 in the FPGA at an instruction from an externally connected terminal (not shown in the drawings).

The secondary control substrate 200 is to connect the primary control substrate 110 to the communication module 25 in accordance with the PDC standard. The secondary control substrate 200 is provided with a connector 201 for connection to the primary control substrate 110, a connector 202 for connection to a terminal 25a of the communication module 25 in accordance with the PDC standard, and an interface circuit 210 for connection between the primary control substrate 110 and the communication module 25. The interface circuit 210 converts the number of pins between the connector 202 and the connector 201, converts the assignment of pins, forms a waveform, etc. The communication module 25 according to an embodiment of the present invention requires a predetermined memory chip storing its own telephone number information etc., and requires a dedicated backup battery. Correspondingly, the memory chip 220 and the backup battery 230 are connected to the communication module 25 of the secondary control substrate 200 through the connector 202. The secondary control substrate 200 is operated by a DC power supply from the primary control substrate 110 as described above, and DC power is supplied to the communication module 25 through the connector 202. An antenna connection terminal 25b of the communication module 25 is connected to an antenna connection terminal 191 provided for the housing 100.

The secondary control substrate 300 is to connect the primary control substrate 110 to the communication module 20 in accordance with the CDMA standard. The secondary control substrate 300 is provided with a connector 301 for connection to the primary control substrate 110, a connector 302 for connection to a terminal 20a of the communication module 20 in accordance with the CDMA standard, and an interface circuit 310 for connection of the primary control substrate 110 to the communication module 20. The interface circuit 310 converts the number of pins between the connector 302 and the connector 301, converts the assignment of pins, generates a waveform, etc. In addition, the secondary control substrate 300 is operated by the DC power supply from the primary control substrate 110 as described above, and supplies DC power to the communication module 20 through the connector 302. An antenna connection terminal 20b of the communication module 20 is connected to an antenna connection terminal 192 provided for the housing 100.

A terminal 26a of the communication module 26 in accordance with the PHS standard is connected to the connector 143 of the primary control substrate 110. An antenna connection terminal 26b of the communication module 26 is connected to an antenna connection terminal 193 attached to a housing 100.

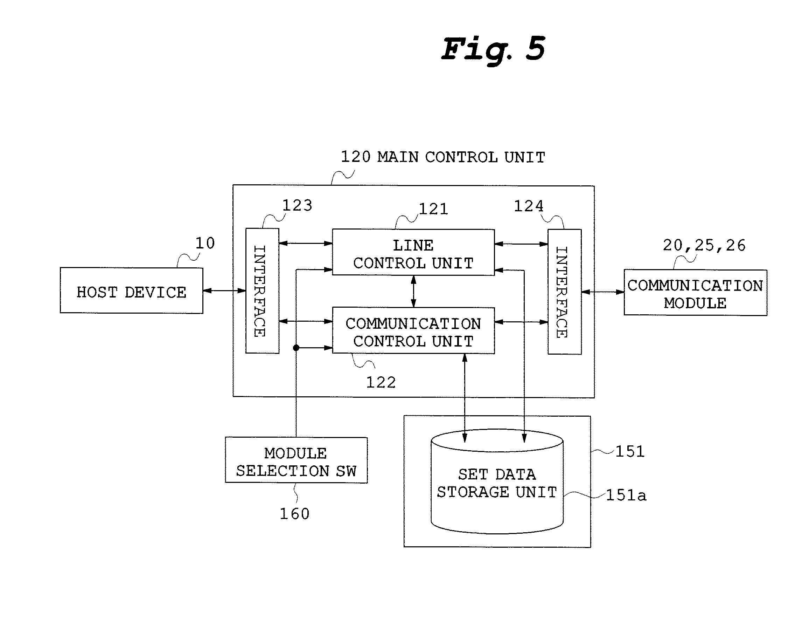

Next, the configuration and the operation of the main control unit 120 are described below with reference to Figure 5. Figure 5 is a block diagram showing the configuration of the main control unit 120. Only the components related to the gist of the present invention are described, but others are omitted.

As shown in Figure 5, the main control unit 120 includes a line control unit 121 for controlling the line such as establishing a line connection etc., a communication control unit 122 for controlling data communication on the line established by the line control unit 121, an interface 123 with the host device 10, and an interface 124 with the communication modules 20, 25, and 26. The line control unit 121 controls line connection by an AT command, and controls connection of an IP layer by the LCP (link control protocol) and the IPCP. The communication control unit 122 performs a converting process of an IP address included in the header of the IP layer in the data communication on the line established by the line control unit 121.

The line control unit 121 and the communication control unit 122 switches the process depending on the communication modules 20, 25, and 26 selected by a module selection switch 160. In the present embodiment, the host device 10 is designed to directly connect the communication modules 25 and 26. Therefore, when the communication module 25 or 26 is selected by the module selection switch 160, the line control unit 121 and the communication control unit 122 do not perform a special process on the data between the host device 10 and the communication module 25 or 26, but only pass the data. On the other hand, when the communication module 20 is selected, the line control unit 121 and the communication control unit 122 perform converting, passing, and discarding processes on the data between the host device 10 and the communication module 20 according to a predetermined rule. The data required for the data processing is stored in a set data storage unit 151a of the EPROM 151.

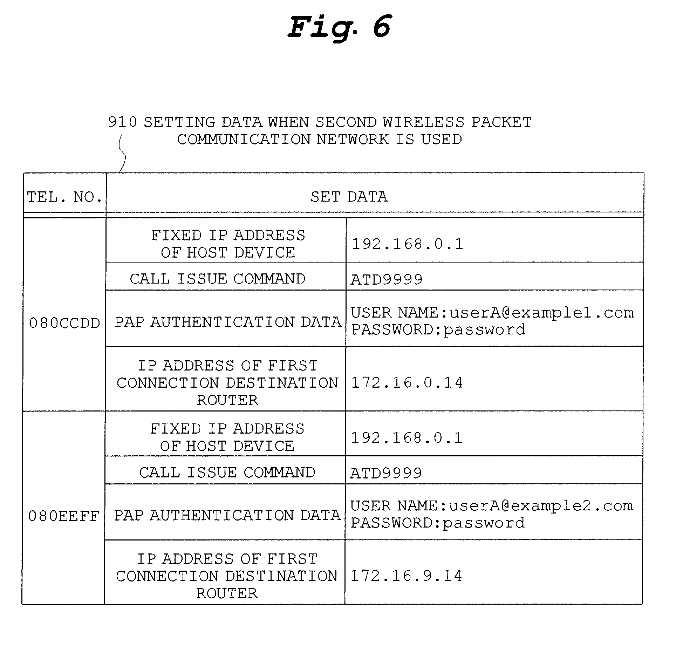

The data stored in the set data storage unit 151a is described with reference to Figure 6. As shown in Figure 6, the set data storage unit 151a stores a set of a telephone number included in the connection request from the host device 10 and the information (connection destination information) required in the process of connecting to a connection destination corresponding to the telephone number. The connection destination information includes a call issue command (including a telephone number) for connection to the wireless packet communication network 40, a fixed IP address of the host device 10, authentication data required for connection to the wireless packet communication network 40, and IP addresses of the connection destination routers 60 and 65. The authentication data describes the information designating the connection destination LAN as a domain name.

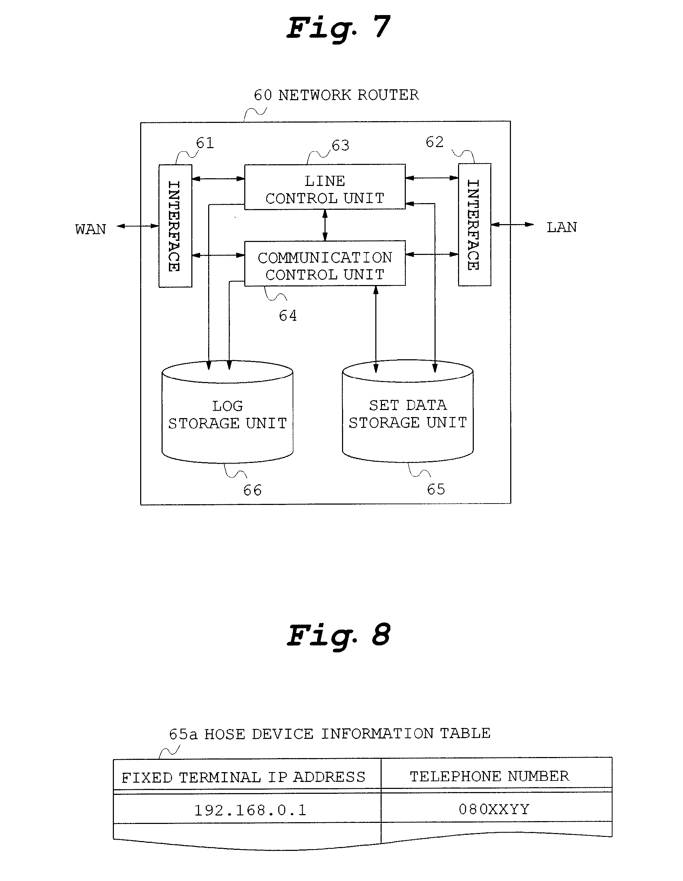

Next, the routers 60 and 65 provided at the boundary point between the wireless packet communication network 40 and the in-house LANs 50 and 55 are described below with reference to Figure 7. Since the routers 60 and 65 are different from each other only in setting information, the router 60 is described here. Figure 7 shows the configuration of the router. The router 60 includes, as shown in Figure 7, a WAN side interface 61, a LAN side interface 62, a line control unit 63 for line control such as the establishment of line connection etc., a communication control unit 64 for control of data communications, a setting data storage unit 65 for storing data necessary for the operations by the communication control unit 64, and a log storage unit 66 for storing the operation histories of the line control unit 63 and the communication control unit 64. The line control unit 63 controls the connection of an IP layer in cooperation with the connection adapter 1 and the messaging server 42. The communication control unit 64 converts an IP address included in the header of the IP layer on the line established by the line control unit 63. The setting data storage unit 65 stores at least data required in converting an address in the communication control unit 64.

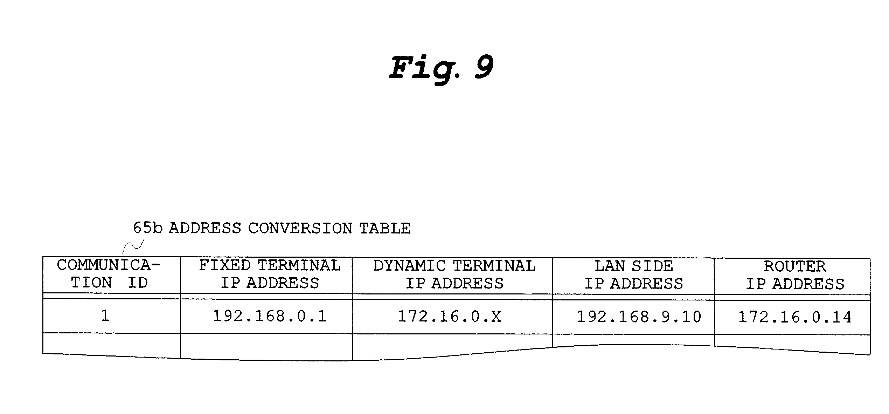

As shown in Figure 8, the setting data storage unit 65 stores a host device information table 65a listing sets of fixed IP addresses (fixed terminal IP addresses) assigned to the host device 10 and telephone numbers of the communication module 20 connected to the host device 10. The fixed terminal IP address is assigned to the host device 10 when a network connection service of assigning the fixed IP address with reference to Figure 2 is used. The setting data storage unit 65 is provided with an address conversion table 65b for storing sets of IP addresses for the address conversion in the communication control unit 64 for each communication. Practically, as shown in Figure 9, the address conversion table 65b stores sets of communication IDs as management information for identifying each communication and fixed terminal IP addresses and IP addresses (dynamic terminal IP addresses) dynamically assigned to the connection adapter 1 of the host device 10 having the fixed terminal IP address, and sets of the IP addresses of the managing computer 51 as a communication partner of the host device 10 and the WAN side IP addresses of the router 60. Each entry of the address conversion table 65b is generated each time a communication is established between the managing computer 51 and the host device 10, and is deleted upon completion of the communication.

Next, the communication procedure in this system is described below with reference to the attached drawings. First, before the description of the communication system according to an embodiment of the present invention, the communication procedure when the network connection service for the host device 10 and the first managing computer 51 is described below with reference to the attached drawings. As described above, since the host device 10 corresponds to the communication module 25 in accordance with the PDC standard and the first wireless packet communication network 45, the connection adapter 1 does not perform any process on the data between the host device 10 and the communication module 25. Also, the router 60 does not perform any special process. A similar operation is performed when the host device 10 is connected to the first in-house LAN 50 using the communication module 26 in accordance with the PHS standard and over the wireless packet communication network 46.

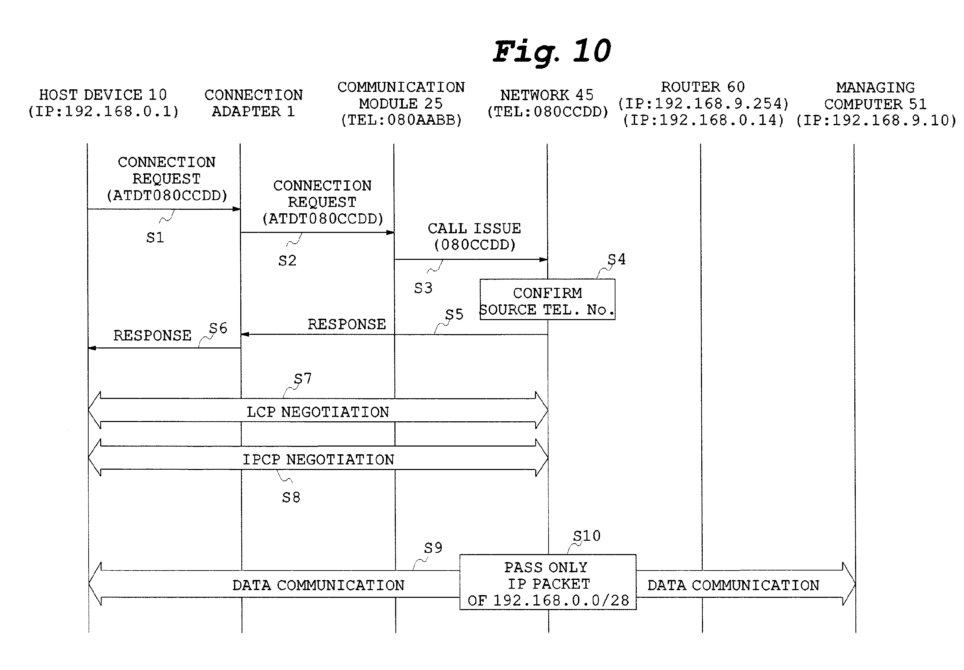

First, the case in which communication is started for the managing computer 51 from the host device 10 is described below with reference to the sequence chart shown in Figure 10.

In this example, the following contents are presumed. That is, assume that the telephone number '080AABB' is assigned to the communication module 25 from the carrier. Assume that an IP address of 192.168.0.0/24 is distributed from the carrier, and the IP address 192.168.0.1 is assigned to the host device 10 connected to the wireless packet communication network 45 using the communication module 25. Assume that the IP address of the managing computer 51 of the communication partner is 192.168.9.10. The communication module 25 is assumed to be connected to the relay device of the wireless packet communication network 45 by issuing a call at an 'ATDT' command to the telephone number '080CCDD'.

As shown in Figure 10, when the host device 10 issues an 'ATDT080CCDD' command to the connection adapter 1 (step S1), the line control unit 121 of the connection adapter 1 transfers the command to the communication module 25 as is (step S2). The trigger of the issue of the call can be the time when an IP packet of the destination address: 192.168.9.10 is generated. At the AT command, the communication module 25 issues a call to the relay device in the wireless packet communication network 45 (step S3). The relay device confirms the telephone number of the source communication module 25, and rejects the connection from the terminal without a contract (step S4). Upon receipt of the response 'CONNECT' indicating that a connection is completed at the circuit level through the communication module 25 (step S5), the line control unit 121 of the connection adapter 1 transfers the response to the host device 10 (step S6).

Next, the host device 10 starts the process to make a connection to the first in-house LAN 50 through the wireless packet communication network 45 by the PPP. Practically, a connection to the relay device of the wireless packet communication network 45 is established at the IP level through the LCP and the IPCP (step S7 and S8). The line control unit 121 of the connection adapter 1 bidirectionally passes the packet relating to the LCP and the IPCP. Thus, the host device 10 can communicate with the first in-house LAN 50 at the IP level. Therefore, the data communication using an upper protocol such as TCP/UDP etc. is started (step S9). The relay device of the wireless packet communication network 45 relays only the IP packet whose address or the source IP address is included in the 192.168.0.0/28 (step S10).

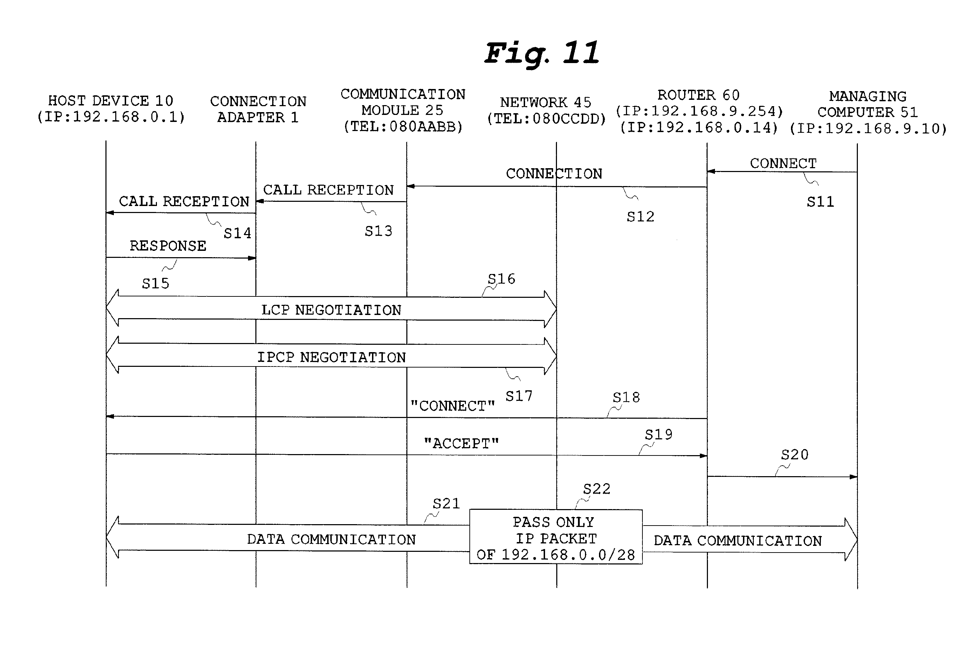

Next, the case where the communication is started on the host device 10 from the first managing computer 51 is described below with reference to the sequence chart shown in Figure 11.

When the first managing computer 51 issues a connection request to a fixed IP address assigned in advance to the host device 10 to communicate with the host device 10 as a communication partner (step S11), the network router 60 transmits the packet to the wireless packet communication network 40 according to the normal routing rule. Thus, the relay device of the wireless packet communication network 45 refers to the destination IP address of the packet, and makes connection to the communication module 25 of the telephone number corresponding to the IP address (step S12). The communication module 25 notifies the connection adapter 1 of the reception of a call (step S13). The connection adapter 1 relays the reception notification to the host device 10 (step S14). Next, if the connection adapter 1 receives a response to the reception notification from the host device 10 (step S15), it starts a connection establishing process by the PPP with the relay device. Practically, the connection adapter 1 establishes a connection at the IP level to the relay device of the wireless packet communication network 45 by the LCP and the IPCP (step S16 and S17). The line control unit 121 of the connection adapter 1 passes bidirectionally the packet relating to the LCP and the IPCP. As described above, the host device 10 and the in-house LAN 50 can communicate with each other at the IP level. Therefore, data communication can be performed between them using an upper protocol such as the TCP/UDP etc. Then, the network router 60 relays the connection request in step S11 to the host device 10 (step S18). Then, the network router 60 relays the response (step S19) from the host device 10 to the managing computer 51 (step S20). Thus, the communications can be present at the IP level between the host device 10 and the in-house LAN 50, thereby starting the data communication using an upper protocol such as the TCP/UDP etc. (step S21). The relay device of the wireless packet communication network 45 relays only the IP packets whose destinations or source IP addresses are included in 192.168.0.0/28 (step S22).

Next, the case in which the communication module 20 and the wireless packet communication network 40 in accordance with the CDMA standard are used without reforming or changing the host device 10 or the first managing computer 51 is described below with reference to the attached drawings.

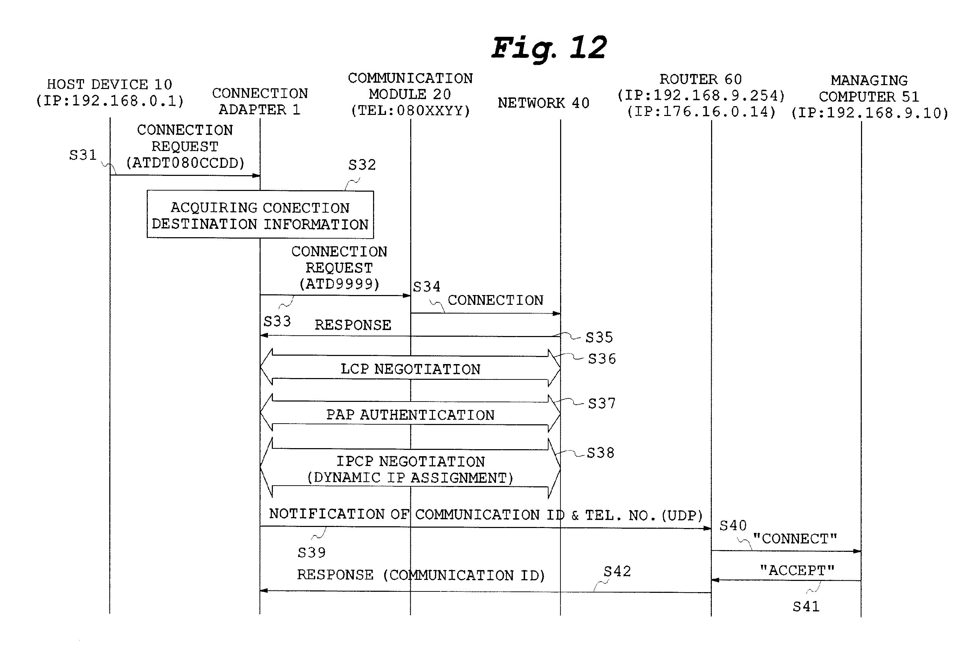

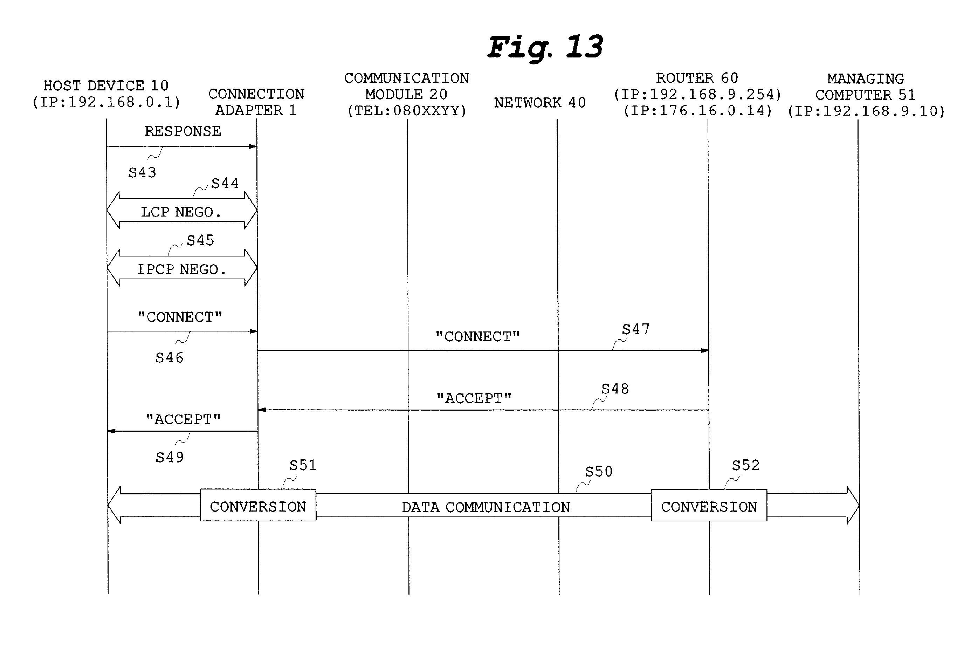

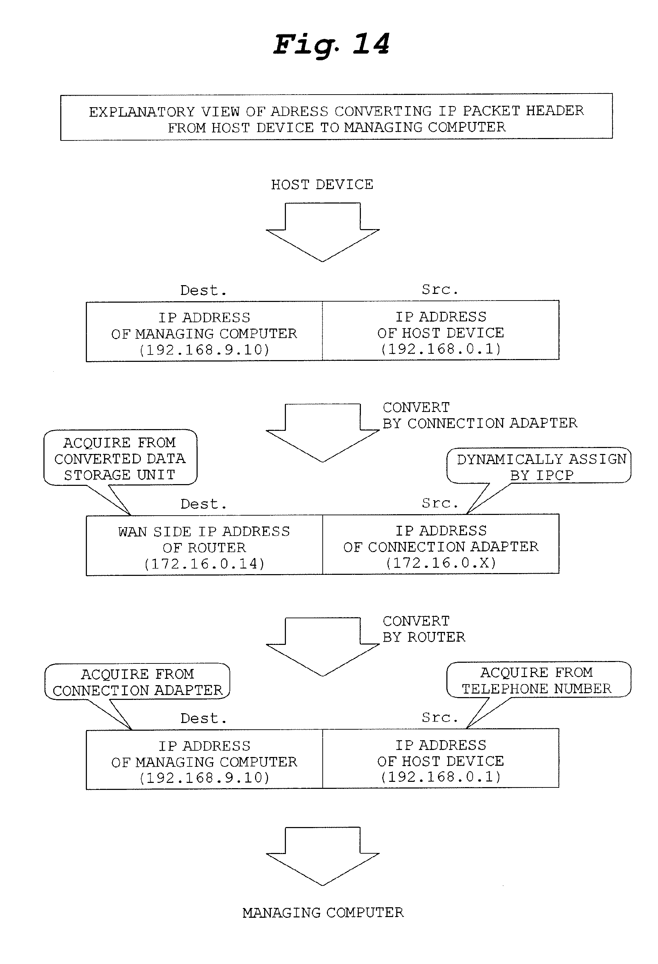

First, with reference to Figures 12 to 14, the case in which communications are started from the host device 10 to the first managing computer 51 is described. Figures 12 and 13 are sequence charts when communications are started from the host device to the managing computer. Figure 14 is an explanatory view of the converting process of the IP address described at the header of the IP packet transmitted from the host device.

The following descriptions are assumed. That is, assume that the communication module 20 is assigned the telephone number of '080XXYY' through a carrier. Also assume that the IP address of 172.16.0.0/28 is distributed from the carrier, and the host device 10 connected to the wireless packet communication network 40 is dynamically assigned one of the IP address 172.16.0.0/28 using the communication module 20. In addition, assume that the router 60 is assigned the addresses of 172.16.0.14. It is assumed that the IP address of the managing computer 51 of the communication partner is 192.168.9.10. The communication module 20 is connected to the relay device 41 of the wireless packet communication network 40 by issuing an 'ATD9999' command. The relay device 41 authenticates a user by the PAP and designates a connection destination (first in-house LAN 50 in the present embodiment).

As shown in Figure 12, when the host device 10 issues an 'ATDT080CCDD' command to the connection adapter 1 (step S31), the line control unit 121 of the connection adapter 1 acquires the connection destination information from the set data storage unit 151a using the telephone number included in the command as a key (step S32). Then, the line control unit 121 of the connection adapter starts a connection to the first in-house LAN 50 according to the connection destination information. Practically, the line control unit 121 of the connection adapter 1 converts the command into 'ATD9999', and transfers it to the communication module 20 (step S33). The trigger of the issue of the command is the time when the IP packet addressed to 192.168.9.10 as shown in Figure 14 is generated, etc. At the AT command, the communication module 20 issues a call to the relay device 41 in the wireless packet communication network 40 (step S34). Upon receipt of the response 'CONNECT' indicating that the connection has been completed at the line level through the communication module 20 (step S35), the line control unit 121 of the connection adapter 1 starts the process of connecting the connection adapter 1 to the first in-house LAN 50 through the PPP.

First, the line control unit 121 of the connection adapter 1 starts an LCP negotiation with the relay device 41 of the wireless packet communication network 40 (step S36). Next, the line control unit 121 of the connection adapter 1 performs a PAP authenticating process with the relay device 41 of the wireless packet communication network 40 (step S37). The PAP authenticating process is not conceived by the host device 10 generated for the wireless packet communication network 45. However, it is required when the wireless packet communication network 40 is used. Therefore, in the present embodiment, the connection adapter 1 performs the authenticating process for the host device 10. When the authenticating process is completed, the line control unit 121 of the connection adapter 1 starts an IPCP negotiation between the connection adapter 1 and the relay device 41 of the wireless packet communication network 40 (step S38). Thus, the IPCP negotiation is completed, and a dynamic IP address 172.16.0.X is assigned from the wireless packet communication network 40 to the line control unit 121 of the connection adapter 1. The assigned dynamic IP address is stored in the storage means such as the RAM 152.

When the PPP negotiation is completed, the line control unit 121 of the connection adapter 1 notifies the router 60 of the telephone number of the communication module 20 and a communication ID having a special value (for example, 0) indicating an issue from the host device 10 using a UDP packet (step S39). The line control unit 63 of the router 60 that has received the notification from the connection adapter 1 registers an entry in the address conversion table 65b for the communication ID included in the notification. Practically, the communication ID included in the notification, the fixed terminal IP address acquired from the host device information table 65a, the source IP address ( = dynamic terminal IP address) of the packet storing the notification, a predetermined IP address of the first managing computer 51, and the WAN side IP address of the router 60 are registered in the address conversion table 65b. Thus, the address conversion table 65b stores necessary data for an address conversion in the communication.

Next, the line control unit 63 of the router 60 transmits a connection request 'CONNECT' in the IP layer to the managing computer 51 (step S40). At this time, the source IP address of the IP packet uses the fixed IP address of the host device 10. That is, the packet relating to the connection request is the prefetch of a connection request issued by the host device 10 in the processes in subsequent steps S46 to S49. The IP addresses of the host device 10 and the first managing computer 51 are acquired with reference to the address conversion table 65b.

Upon receipt of the response 'ACCEPT' to the connection request (step S41), the line control unit 63 of the router 60 transmits a response including a communication ID to the connection adapter 1 as a response in step S39 (step S42). The destination IP address of the response received from the first managing computer 51 is a fixed IP address of the host device 10. However, the line control unit 63 of the router 60 does not relay the packet to the wireless packet communication network 40 at this stage.

After receiving a response from the router 60, the line control unit 121 of the connection adapter 1 transmits a response 'CONNECT' indicating that the connection has been completed at the line level (step S43). Upon receipt of the response, the host device 10 starts the LCP negotiation and the IPCP negotiation (steps S44 and S45). A point to node here is that the line control unit 121 of the connection adapter 1 transmits a response to the host device 10. Thus, the host device 10 views the connecting process as being performed with the wireless packet communication network 45 with reference to Figure 10.

In the process above, the communication at the IP level can be performed between the host device 10 and the connection adapter 1, and between the connection adapter 1 and the first managing computer 51. Thus, the host device 10 transmits a connection request 'CONNECT' in the IP layer to the first managing computer 51 (step S46). The connection request corresponds to the first packet of the data communication in step S9 shown in Figure 10. Therefore, the destination IP address is the IP address of the first managing computer 51, and the source IP address is the fixed terminal IP address of the host device 10. Upon receipt of the connection request, the line control unit 121 of the connection adapter 1 converts the destination IP address into the WAN side IP address of the router 60, converts the source IP address into the dynamic terminal IP address assigned by the wireless packet communication network 40, and transmits it to the router 60 (step S47). The line control unit 63 of the router 60 transmits a response to the connection adapter 1 in response to the connection request (step S48). After receiving the response, the line control unit 121 of the connection adapter 1 converts the destination IP address into the fixed terminal IP address of the host device 10, converts the source IP address into the IP address of the first managing computer 51, and transfers the result to the host device 10 (step S49).

After the process above, the host device 10 determines that the connection to the first managing computer 51 has been completed, and starts the data communication to the first managing computer 51 (step S50). The communication control unit 64 of the router 60 and the communication control unit 122 of the connection adapter 1 perform an address conversion on the header of the IP packet (steps S51, S52). Practically, as shown in Figure 14, the fixed terminal IP address (192.168.0.1) and the dynamic terminal IP address (172.16.0.X) are mutually converted, and the WAN side IP address (172.16.0.14) of the router 60 and the IP address (192.168.9.10) of the first managing computer 51 are mutually converted. After the process above, communications can be started from the host device 10 with the first managing computer 51.

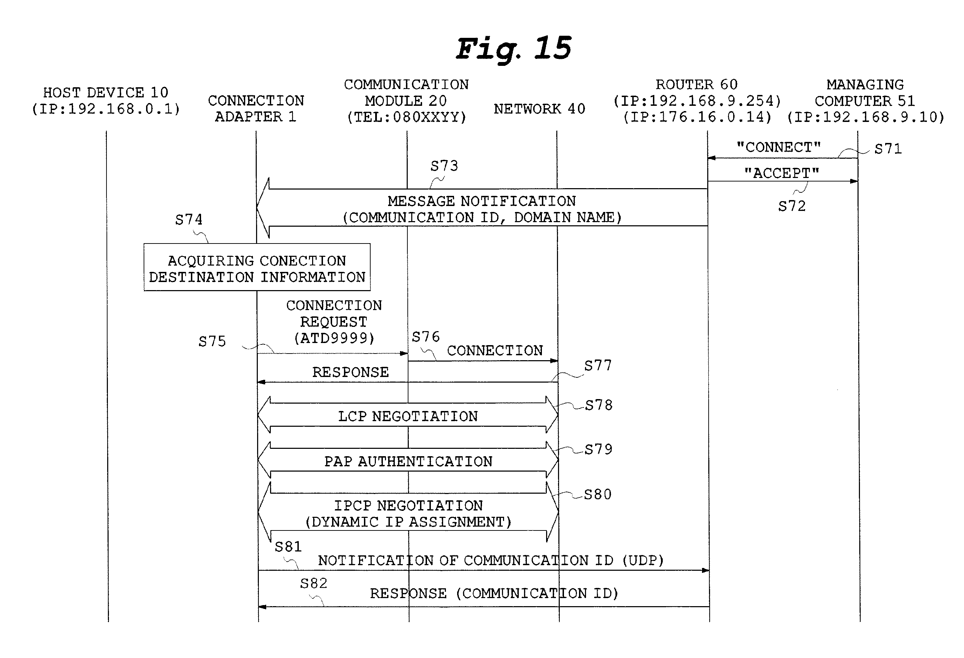

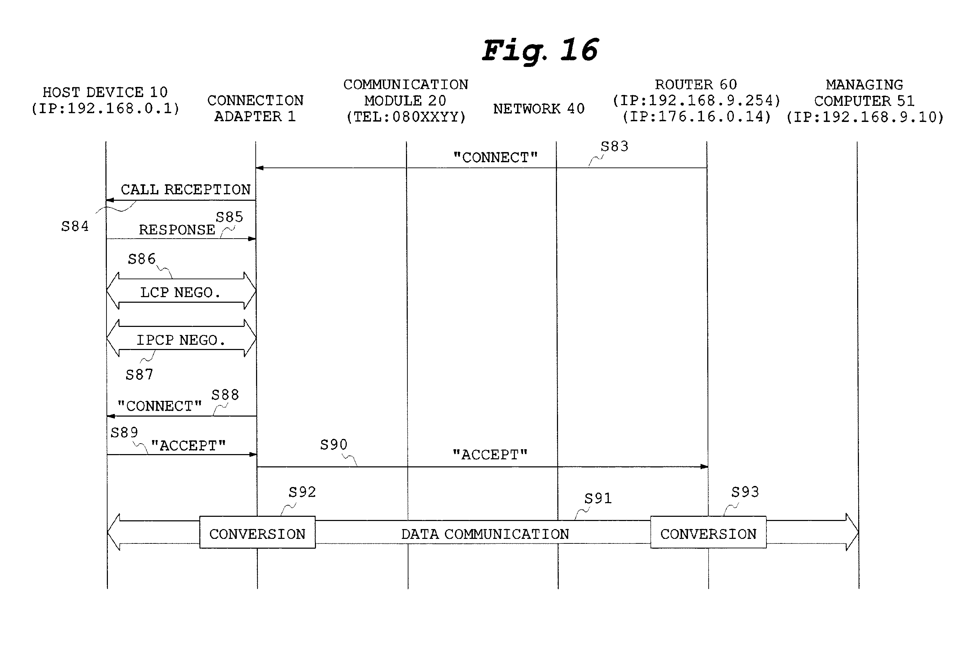

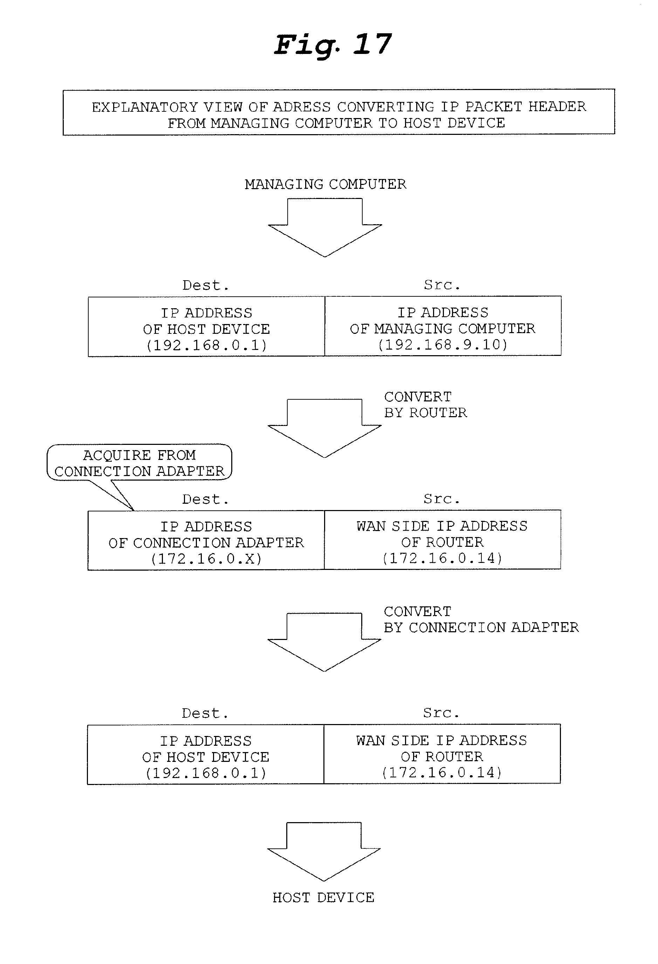

Next, the case in which communications are started from the first managing computer 51 of the first in-house LAN 50 to the host device 10 is described with reference to Figures 15 to 17. Figures 15 and 16 show the sequence of the communication started from the managing computer, and Figure 17 is an explanatory view of the process of converting an address.

The first managing computer 51 issues a packet of a connection request 'CONNECT' addressed to the fixed terminal IP address assigned in advance to the host device 10 to communicate with the host device 10 as a communication partner (step S71). The line control unit 63 of the router 60 returns a reply in response to the connection request to the first managing computer 51 on behalf of the host device 10 (step S72).

Next, the line control unit 63 of the router 60 acquires a telephone number corresponding to the destination IP address of the connection request packet from the host device information table 65a. Then, the line control unit 63 generates a communication ID to uniquely identify the communication, and registers the entry of the communication in the address conversion table 65b. Then, the line control unit 63 transmits a message addressed to the acquired telephone number, that is, using the messaging service to the connection adapter 1 connected to the host device 10 (step S73). The transmission of the message is performed by issuing a request to the messaging server 42 to transmit a message by the HTTP. In addition, the message to be transmitted includes the communication ID and the IP address and the domain name (example1 in the present embodiment) of the first managing computer 51 as a connection requester.

After receiving the message, the line control unit 121 of the connection adapter 1 acquires connection destination information from the set data storage unit 151a using a domain name included in the message as a key (step S74). Then, the line control unit 121 of the connection adapter starts a connecting process to the first in-house LAN 50 according to the connection destination information. Practically, the "ATD9999" command is transmitted to the communication module 20 (step S75). At the AT command, the communication module 20 issues a call to the relay device 41 in the wireless packet communication network 40 (step S76). Upon receipt of the response 'CONNECT' indicating that the connection has been completed at a line level through the communication module 20 (step S77), the line control unit 121 of the connection adapter 1 starts the process of connecting the connection adapter 1 to the first in-house LAN 50 by the PPP.

First, the line control unit 121 of the connection adapter 1 starts the LCP negotiation between the wireless packet communication network 40 and the relay device 41 (step S78). Next, the line control unit 121 of the connection adapter 1 performs a PAP authenticating process with the relay device 41 of the wireless packet communication network 40 (step S79). Next, the line control unit 121 of the connection adapter 1 starts the IPCP negotiation between the connection adapter 1 and the relay device 41 of the wireless packet communication network 40 (step S80). Thus, the IPCP negotiation is completed, and the wireless packet communication network 40 assigns a dynamic IP address 172.16.0.X to the line control unit 121 of the connection adapter 1. The assigned dynamic IP address is stored in the storage means such as the RAM 152.

When the PP negotiation is completed, the line control unit 121 of the connection adapter 1 transmits to the router 60 a communication ID received from the router 60 in a UDP packet (step S81). The line control unit 63 of the router 60 transmits a response including a communication ID to the connection adapter 1 (step S82), and registers the source IP address (= dynamic terminal IP address) of the packet storing the communication ID and the WAN side IP address of the router 60 in the address conversion table 65b for the communication ID received from the connection adapter 1. Thus, the address conversion table 65b stores necessary data for an address conversion in the communication.

Next, the line control unit 63 of the router 60 relays the connection request packet in step S71 to the connection adapter 1 (step S83). At this time, the destination IP address of the connection request packet is converted into the dynamic terminal IP address of the connection adapter 1, and the source IP address is converted into the WAN side IP address of the router 60. Upon receipt of the connection request, the line control unit 121 of the connection adapter 1 notifies the host device 10 of the reception (step S84). Upon receipt of the reception notification, the host device 10 notifies the connection adapter 1 of the response to the reception notification (step S85), and starts the LCP negotiation and the IPCP negotiation (step S86, S87). The point to note here is that the line control unit 121 of the connection adapter 1 returns a response to the host device 10. Thus, the host device 10 views the connecting process being performed with the wireless packet communication network 45 with reference to Figure 11.

When the PPP negotiation is completed, the line control unit 121 of the connection adapter 1 transfers the connection request packet received from the router 60 in step S83 to the host device 10 (step S88). At this time, the destination IP address of the connection request packet is converted into a fixed terminal IP address of the host device 10. Upon receipt of the connection request packet, the host device 10 transmits a response to the connection adapter 1 (step S89). The destination and source IP addresses of the response packet are acquired by exchanging the destination IP address with the source IP address of the connection request packet. The connection adapter 1 converts the source IP address into the dynamic terminal IP address of the connection adapter 1, and transmits the result to the router 60 (step S90).

After the process above, the host device 10 determines that the connection to the first managing computer 51 has been completed, and starts the data communication to the first managing computer 51 (step S92). The communication control unit 64 of the router 60 and the communication control unit 122 of the connection adapter 1 perform address conversion on the header of the IP packet (steps S93, S94)). Practically, as shown in Figure 17, the communication control unit 64 of the router 60 mutually convert the fixed terminal IP address (192.168.0.1) and the dynamic terminal IP address (172.16.0.X), and also mutually converts the WAN side IP address (172.16.0.14) of the router 60 and the IP address (192.168.9.10) of the first managing computer 51. The communication control unit 122 of the connection adapter 1 mutually converts the fixed terminal IP address (192.168.0.1) and the dynamic terminal IP address (172.16.0.X).

The communication procedure used when a connection from the first managing computer 51 to the host device 10 is made through the wireless packet communication network 40 is described above, but a similar communication procedure is used when a connection is made from the second managing computer 56 of the second in-house LAN 55 to the host device 10. That is, when communications are established from the second in-house LAN 55, the router 60 includes a domain name ('example2' in the present embodiment) corresponding to the second in-house LAN 55 in the message transmitted to the connection adapter 1. Thus, the connection adapter 1 can acquire setting information corresponding to the second in-house LAN 55 from the set data storage unit 51 using the domain name as a key.

In the embodiment above, since a connection request including a telephone number is fixedly set, the host device 10 appropriately rewrites the connection destination information about the set data storage unit 151a, thereby starting the communication from the host device 10 to the second managing computer 56.

As described above in detail, in the system according to the present embodiment, the network connection service of assigning a dynamic IP address can be used without changing or improving the host device 10 and the first managing computer 51 that use the network connection service of assigning a fixed IP. To be more concrete, although the network connection service of assigning a dynamic IP address is operating, communications can be started from the first managing computer 51 to the host device 10. In addition, the source IP address of a packet received by the first managing computer 51 is the fixed IP address assigned to the host device 10 in advance. Therefore, first the managing computer 51 can designate a communication partner although communications are started from the host device 10 to the first managing computer 51.

In the system according to the present embodiment, although the host device 10 can be connected only to the first managing computer 51, the device can communicate with the second managing computer 56. That is, the host device 10 can communicate with any computer by appropriately setting the connection destination information stored in the set data storage unit 151.

In addition, since the connection adapter 1 according to the present embodiment converts, discards, and passes data transmitted between the host device 10 and the communication modules 20, 25, and 26 so that the data can be correctly processed in each equipment, various differences among the protocol service communication modules 20, 25, and 26 in the wireless packet communication networks 40, 45, and 46 can be appropriately absorbed.

### (Second Embodiment)

The second embodiment of the present invention is described below with reference to the attached drawings. The point of the communication system according to the present embodiment different from the first embodiment is the mode of the network connection service in the wireless packet communication network 40. Described below is the second embodiment different in the mode of the connection service from the first embodiment.

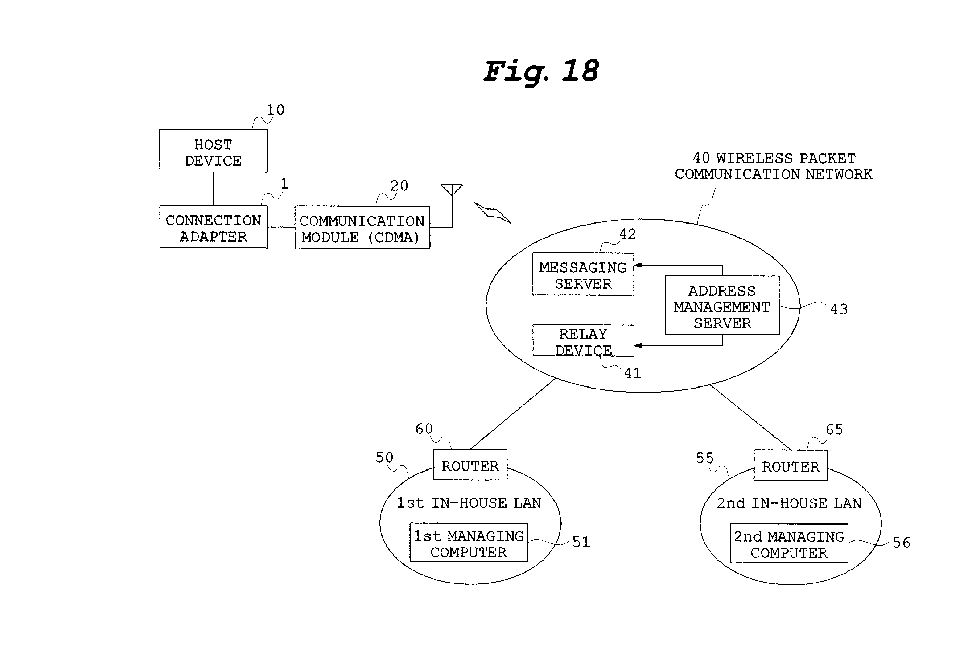

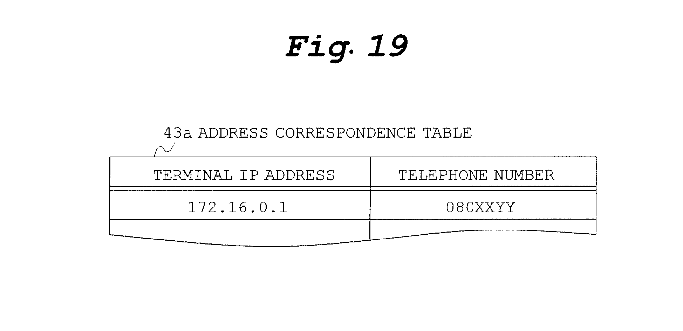

In this connection service, as with the first embodiment, an IP address is assigned to a connection terminal in the dynamic IP assigning technique. However, unlike the first embodiment, the IP address to be assigned to the connection terminal is predetermined. As shown in Figure 18, an address management server 43 is provided in the wireless packet communication network 40. The address management server 43 manages a list of the telephone number of a connection terminal and IP addresses distributed to the terminal having the telephone number. Practically, as shown in Figure 19, the address management server 43 is provided with an address correspondence table 43a describing the correspondence between a telephone number and an IP address. The address management server 43 provides a user with an interface for update of the address correspondence table 43a.

In this connection service, the wireless packet communication network 40 acquires the telephone number of the connection terminal when a terminal is connected. Then, the IP address corresponding to the telephone number is acquired from the address correspondence table 43a, and distributes the acquired IP address to the connection terminal. An IPCP is used in distributing the address. That is, in the present embodiment, a technique of dynamically assigning an IP called IPCD, but a distributed IP address is predetermined.

In this connection service, the wireless packet communication network 40 receives an IP packet addressed to the IP address corresponding to the terminal from the in-house LANs 50 and 55, and when the terminal is not connected to the wireless packet communication network 40, the messaging server 42 acquires the telephone number corresponding to the IP packet from the address management server 43. The wireless packet communication network 40 transmits a message to the telephone number. The messaging service is not a network connection service using the TCP/IP, but is implemented through a unique protocol using a wireless communication network. The message includes the domain names of the source in-house LANs 50 and 55, thereby allowing the terminal to recognize that there is a connection request from the in-house LANs 50 and 55.

In the present embodiment, when the above-mentioned network connection service is used, the configuration and the operation of the router 60 and connection adapter 1 are different from those according to the first embodiment. First, the router 60 is described below. The address system of the network according to the present embodiment is similar to the system shown in Figure 3.

In the first embodiment above, the router 60 is provided with the line control unit 63 and the communication control unit 64. The line control unit 63 reports a connection request from the in-house LANs 50 and 55 using a short message. However, in the present embodiment, when a packet enters the wireless packet communication network 40 from the in-house LANs 50 and 55, the wireless packet communication network 40 automatically transmits the message. Therefore, in the present embodiment, the line control unit 63 is not required. Also, in the first embodiment, since the IP address of the connection terminal is not constant, the communication control unit 64 of the router 60 performs an address converting process. However, in the present embodiment, since the IP address of the connection terminal is determined by the address management server 43, the communication control unit 64 does not require the address converting process. Therefore, the communication control unit 64 of the router 60 only has to be provided with a common relaying function between the in-house LANs 50 and 55 and the wireless packet communication network 40. That is, a general router 60 in the presumed communication system described with reference to Figure 2 can be used.

On the other hand, as in the first embodiment, the line control unit 121 of the connection adapter 1 performs line control such as establishment of line connection etc. In addition, the communication control unit 122 controls the data communication on the line established by the line control unit 121 as in the first embodiment. However, the line control unit 121 and the communication control unit 122 have an operation different from the operation according to the first embodiment in the above-mentioned network connection service. The operation of the connection adapter 1 is described later.

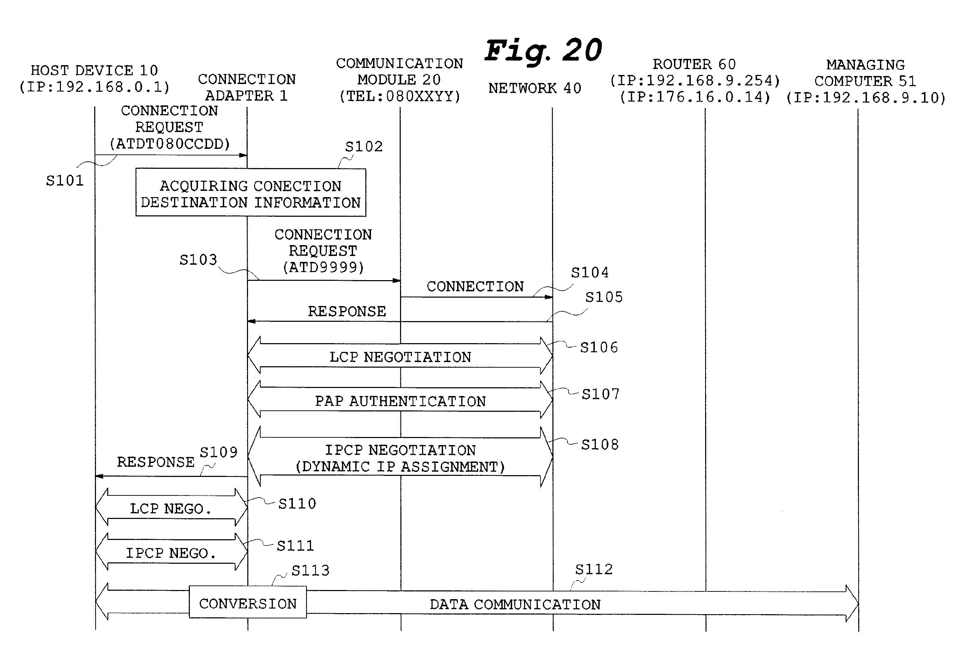

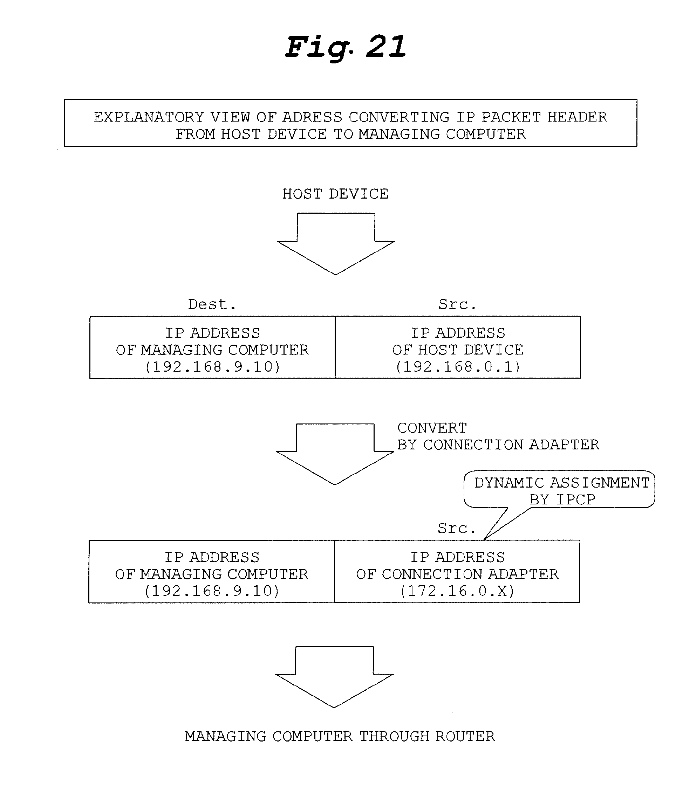

The communication procedure with the present system is described below with reference to the attached drawings. First, with reference to Figures 20 and 21, the case in which communications are started from the host device 10 to the first managing computer 51 is described. Figure 20 is a sequence chart when communications are started from the host device to the managing computer. Figure 21 is an explanatory view of the converting process of the IP address described at the header of the IP packet transmitted from the host device.

As shown in Figure 20, when the host device 10 issues an 'ATDT080CCDD' command to the connection adapter 1 (step S101), the line control unit 121 of the connection adapter 1 acquires connection destination information from the set data storage unit 151a using the telephone number included in the command as a key (step S102). Then, the line control unit 121 starts the process of connecting to the first in-house LAN 50 according to the connection destination information. Practically, the line control unit 121 of the connection adapter 1 converts the command into 'ATD9999', and transfers it to the communication module 20 (step S103). The trigger of the issue of the command is the time when the IP packet addressed to 192.168.9.10 as shown in Figure 21 is generated, etc. At the AT command, the communication module 20 issues a call to the relay device 41 in the wireless packet communication network 40 (step S104). Upon receipt of the response 'CONNECT' indicating that the connection has been completed at the line level through the communication module 20 (step S105), the line control unit 121 of the connection adapter 1 starts the process of connecting the connection adapter 1 to the first in-house LAN 50 through the PPP.

First, the line control unit 121 of the connection adapter 1 starts an LCP negotiation with the relay device 41 of the wireless packet communication network 40 (step S106). Next, the line control unit 121 of the connection adapter 1 performs a PAP authenticating process with the relay device 41 of the wireless packet communication network 40 (step S107). The PAP authenticating process is not conceived by the host device 10 generated for the wireless packet communication network 45. However, it is required when the wireless packet communication network 40 is used. Therefore, in the present embodiment, the connection adapter 1 performs the authenticating process for the host device 10. When the authenticating process is completed, the line control unit 121 of the connection adapter 1 starts an IPCP negotiation between the connection adapter 1 and the relay device 41 of the wireless packet communication network 40 (step S108). Thus, the IPCP negotiation is completed, and a dynamic IP address 172.16.0.X is assigned from the wireless packet communication network 40 to the line control unit 121 of the connection adapter 1. As described above, the present embodiment is quite different from the first embodiment in that the assigned IP address is predetermined for the communication module 20 as a connection terminal. The assigned dynamic IP address is stored in the storage means such as the RAM 152 etc.

When the PPP negotiation is completed, a response 'CONNECT' indicating that the connection has been completed at the line level is transmitted to the host device 10 (step S109). The host device 10 receives the response, and starts LCP negotiation and the IPCP negotiation (steps S110 and S111). The point to note is that the line control unit 121 of the connection adapter 1 issues a response to the host device 10. Thus, from the host device 10, the connecting process is performed with the wireless packet communication network 45 as described above with reference to Figure 10.

Since the connection between the host device 10 and the in-house LAN 50 is completed in the above-mentioned process, the host device 10 starts data communications to the managing computer 51 (step S112). The communication control unit 122 of the connection adapter 1 performs an address conversion on the header of the IP packet (step S113). Practically, as shown in Figure 11, the fixed terminal IP address 192.168.0.1 and the dynamic terminal IP address 172.16.0.X are mutually converted. In the process above, the communication with the first managing computer 51 can be established and started from the host device 10.

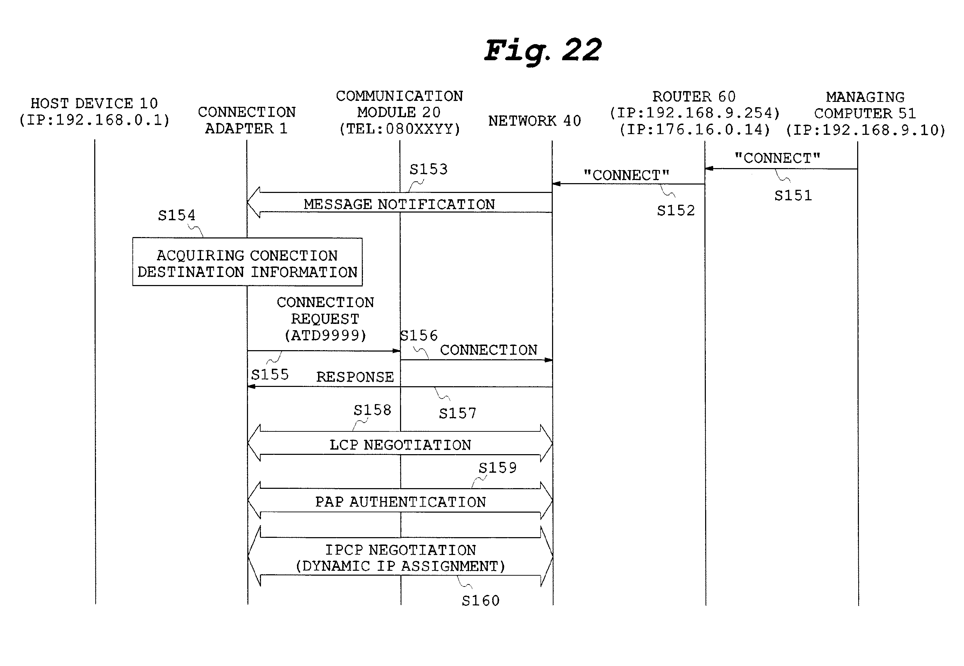

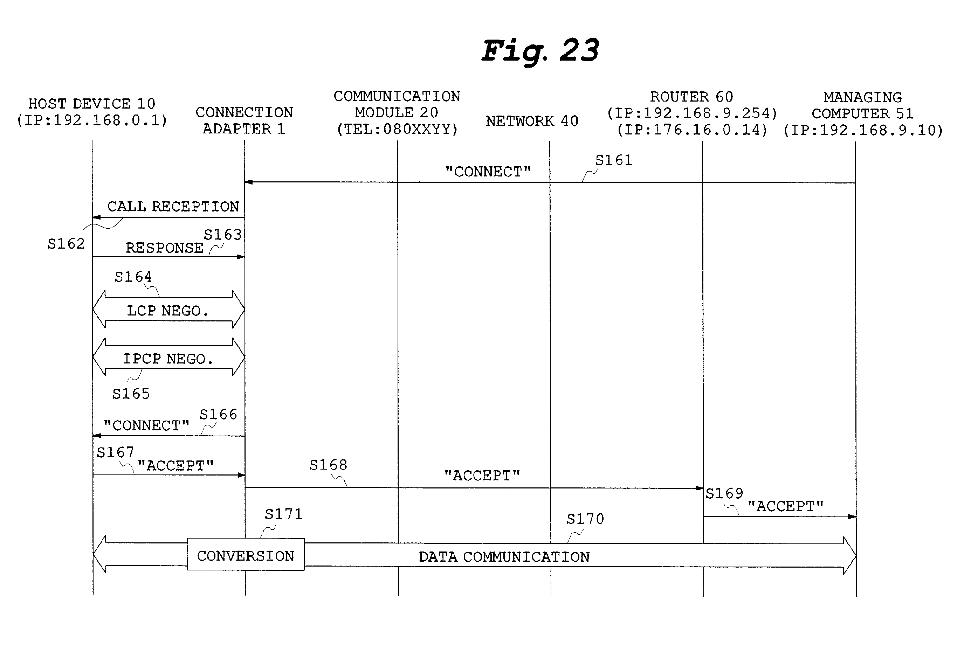

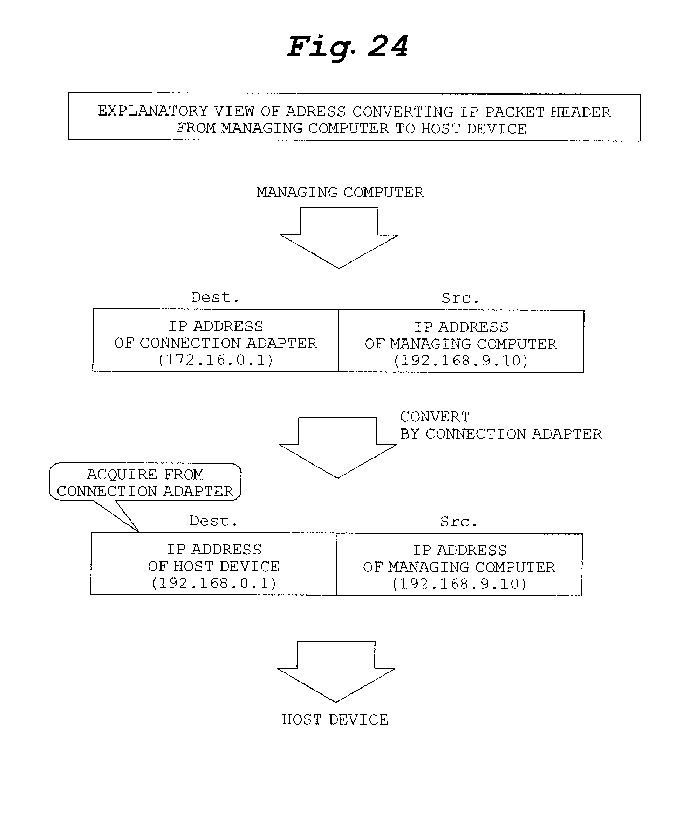

Next, the case in which communications are started from the first managing computer 51 of the first in-house LAN 50 to the host device 10 is described with reference to Figures 22 and 24. Figures 22 and 23 are sequence charts of the communications to be started from the managing computer. Figure 24 is an explanatory view of the step of converting an address.

In this process, it is assumed that the IP address 172.16.0.1 is assigned in the address management server 43 to the communication module 20 connected to the host device 10.

When the first managing computer 51 issues a connection request addressed to the IP address 172.16.0.1 of the communication module 20 connected to the host device 10 to communicate with the host device 10 as a communication partner (step S151), the router 60 relays the packet to the wireless packet communication network 40 according to the normal routing rule (step S152).

The wireless packet communication network 40 refers to the destination IP address of the packet received through the network router 60, acquires the telephone number corresponding to the IP address from the address management server 43, and then transmits a message that the connection request is received from the in-house LAN 50 to the telephone number through the messaging service (step S153). As described above, the message includes a domain name (example1 in the present embodiment) corresponding to the first in-house LAN 50). The wireless packet communication network 40 discards a packet relating to the connection request received through the router 60.

The line control unit 121 of the connection adapter 1 that has received a message acquires connection destination information from the set data storage unit 151a using a domain name included in the message as a key (step S154). Then, the line control unit 121 of the connection adapter 1 starts a connecting process to the first in-house LAN 50 on the basis of the connection destination information. Practically, it transmits an 'ATD9999' command to the communication module 20 (step S155). At the AT command, the communication module 20 issues a call to the relay device 41 in the wireless packet communication network 40 (step S156). Upon receipt of a response 'CONNECT' indicating that the connection has been completed at the line level through the communication module 20, the line control unit 121 of the connection adapter 1 (step S157), the process of connecting the connection adapter 1 to the first in-house LAN 50 is started by the PPP.

First, the line control unit 121 of the connection adapter 1 starts the LCP negotiation with the relay device 41 of the wireless packet communication network 40 (step S158). Next, the line control unit 121 of the connection adapter 1 performs the PAP authenticating process with the relay device 41 of the wireless packet communication network 40 (step S159). Next, the line control unit 121 of the connection adapter 1 starts the IPCP negotiation between the connection adapter 1 and the relay device 41 of the wireless packet communication network 40 (step S160). Thus, the IPCP negotiation is completed, and a dynamic IP address 172.16.0.X is assigned to the line control unit 121 of the connection adapter 1 from the wireless packet communication network 40. The present embodiment is quite different from the first embodiment in that the assigned IP address is predetermined to the communication module 20 as a connection terminal. The assigned dynamic IP address is stored in the storage means such as the RAM 152 etc.

When the PP negotiation is completed, a connection request packet from the first managing computer 51 reaches the connection adapter 1 (step S161). As described above, the wireless packet communication network 40 has discarded the packet transmitted by the managing computer 51 in step S151. Therefore, the first managing computer 51 cannot receive a response of the connection request packet, and retransmits a connection request packet upon timeout. In addition, since some time is required for the processes in steps S153 to S159, the retransmitted packet further reaches timeout. Therefore, the connection request packet reaching the connection adapter 1 is the latest packet in the packets retransmitted several times.

Upon receipt of the connection request packet from the first managing computer 51, the line control unit 121 of the connection adapter 1 notifies the host device 10 of the reception (step S162). Upon receipt of the reception notification, the host device 10 notifies the connection adapter 1 of the response to the reception notification (step S163), and starts the LCP negotiation and the IPCP negotiation (steps S164, S165). The point to note is a response to be transmitted from the line control unit 121 of the connection adapter 1 to the host device 10. Thus, it seems to the host device 10 that the connecting process is being performed with the wireless packet communication network 45 described above with reference to Figure 11.

When the PPP negotiation is completed, the line control unit 121 of the connection adapter 1 transfers the connection request packet received from the first managing computer 51 in step S161 to the host device 10 (step S166). Upon receipt of the connection request packet, the host device 10 returns a response to the connection adapter 1 (step S167). The connection adapter 1 relays the response packet to the router 60 (step S168). The router 60 relays the response packet to the first managing computer 51 according to the normal routing rule (step S169).

In the process above, the host device 10 determines that the connection to the first managing computer 51 has been completed, and starts the data communication to the first managing computer 51 (step S170). The communication control unit 122 of the connection adapter 1 performs an address conversion on the header of an IP packet (step S171). Practically, as shown in Figure 24, a fixed terminal IP address (192.168.0.1) and a dynamic terminal IP address (172.16.0.1) are mutually converted.

As described above in detail, in the communication system according to the present embodiment, the router 60 can be a common router, the configuration of the system can be easily prepared at a lower cost. Other advantages are the same as in the first embodiment.

The embodiments of the present invention have been described above in detail, but the present invention is not limited to the embodiments. For example, in the embodiments above, the router 60 acquires a dynamic IP address assigned to the connection adapter 1 by referring to the source IP address in the packet storing the notification received from the connection adapter 1, but the dynamic IP address can be included in the notification.

The telemetring system for managing a vending machine is described in the embodiments above, but the present invention can be realized in other telemetring systems and telematics systems.

Also in the above-mentioned embodiment, the PDC standard, the CDMA standard, and the PHS standard are exemplified as communication modules, but other standards can be used in embodying the present invention. Similarly, any other interface standards on the host device side than those listed above can be applied.

Furthermore, in each of the above-mentioned embodiments, an authenticating method, an address system, an address assigning method (assigning a fixed IP address or a dynamic IP address) are exemplified as differences between the network connection service in the wireless packet communication networks 45 and 46 and the network connection service in the wireless packet communication network 40. However, the present invention can be applied when a difference is one of them or a combination of them. Furthermore, other differences can be absorbed by the connection adapter as necessary. For example, in the above-mentioned embodiment, a PAP authentication is performed by the wireless packet communication network 40. However, for example, when a connection is made to a communication network in which a CHAP (challenge handshake authentication protocol) authentication is performed, the CHAP can be implemented to the connection adapter.

Furthermore, in each of the above-mentioned embodiments, the connection adapter 1 can include three communication modules 20, 25, and 26, and each of the wireless packet communication networks 40, 45, and 46 are arbitrarily available, but one of the communication modules 20, 25, and 26 can be included and connected.

## Claims

1. A connection adapter for communication device, comprising:
a first interface for connecting communication equipment for a network connection service;
a second interface for connecting a host device for performing communication using the communication equipment;
a connection control unit for performing a network connecting process;
a communication control unit for relaying communication using the communication equipment by the host device; and storage means for storing a telephone number associated with connection destination information required for network connection, wherein:
upon receipt of a connection request including a telephone number from the host device, the connection control unit acquires the connection destination information from the storage means on a basis of the telephone number, and performs a network connecting process according to the connection destination information.

2. The connection adapter for communication device according to claim 1, wherein:
the communication equipment is used for a network connection service of assigning a dynamic IP address to a connection terminal; and
the connection control unit of the connection adapter acquires the connection destination information from the storage means at a connection start request when the communication equipment receives the connection start request from a network side, and the network connecting process is performed using the connection destination information.

3. The connection adapter for communication device according to claim 2, wherein
the connection start request from the network side is received from a messaging service provided by the network connection service.

4. The connection adapter for communication device according to any one of claims 1 to 3, wherein
the communication control unit converts an IP address stored in a header of an IP packet.
